# FASCICULE DE BREVET EUROPEEN

(11) **EP 2 070 627 B1**
(45) Date de publication et mention de la délivrance du brevet: **16.02.2011**
(21) Numéro de dépôt: 08291168.6
(22) Date de dépôt: 11.12.2008
(51) Int. Cl.: B23K 9/00, B23K 9/025, B21C 37/08, B21C 37/14, B21C 37/18, B21D 51/10, E04H 12/08

(54) **Procédé de fabrication par soudage d'un poteau bi-matériau**
Verfahren zur Herstellung durch Schweissen von einem Mast aus zwei Materialien
Method for manufacturing through welding of a column from two materials

(30) Priorité: 11.12.2007 FR 0708614
(43) Date de publication de la demande: 17.06.2009
(73) Titulaire: Conimast International (SA), 89600 Saint Florentin (FR)
(72) Inventeur: Mathiot, Michel, 89300 Looze (FR); Desa, Manuel, 89360 Percey (FR)
(74) Mandataire: Oudin, Stéphane

(56) Documents cités:
- FR-A- 2 884 447
- JP-A- 2 229 671
- JP-A- 63 260 683
- JP-A- 2005 028 417

## Description

La présente invention concerne un procédé de fabrication d'un poteau bi-matériaux à partir d'au moins deux ébauches en forme générale de trapèze réalisées avec précision dans un atelier de métallerie conformément au préambule de la revendication 1. Le procédé est particulièrement destiné à la fabrication de candélabres d'éclairage public.

De nombreux donneurs d'ordres, notamment les municipalités imposent dans leurs cahiers des charges relatifs aux candélabres polygonaux ou cylindro-coniques d'éclairage public de respecter une garantie anti-corrosion de 10 années minimum principalement contre les projections alcalines et le milieu ambiant. Cette imposition implique, compte tenu du coût élevé des matériaux résistant très bien à la corrosion, que lesdits candélabres soient composés de deux types de matériaux. Ainsi, les candélabres sont constitués d'une embase inférieure réalisée dans un matériau résistant à la corrosion tel que l'acier inoxydable, d'environ 400 mm de hauteur, sur laquelle est soudée en bout à bout un fût portant une ou plusieurs crosses et une ou plusieurs lanternes, ledit fût étant réalisé dans un matériau moins résistant et plus économique tel que l'acier. Le problème de ce type de candélabre est, d'une part, d'obtenir une soudure possédant une résistance mécanique suffisante pour résister aux sollicitations du milieu ambiant notamment le vent et, d'autre part, de masquer ou de rendre non apparente ladite soudure entre l'embase et le fût afin de rendre le candélabre plus esthétique.

Dans le domaine des candélabres bi-matériaux, on connaît de nombreux procédés de fabrication consistant à réaliser la soudure en bout à bout à plat entre l'embase et le fût avant pliage avec ou non l'ajout d'un renfort intérieur ou d'une bague extérieure servant notamment à masquer ladite soudure.

Ainsi, parmi ces différents procédés de fabrication, on connaît déjà une technique consistant à positionner une bague réalisée par oxycoupage à la jonction entre le fût et l'embase en acier inoxydable et à souder de chaque coté de la bague pour assembler ledit fût et ladite embase, ladite bague étant alors en saillie par rapport au fût et à l'embase. Cette technique permet d'assurer la tenue mécanique des candélabres avec leurs charges additionnelles telles que crosses, lanternes et autres jardinières et la protection anti-corrosion ; en revanche, le candélabre reste inesthétique car la bague réalisant la jonction entre le fût et l'embase est apparente.

On connaît aussi un autre procédé de fabrication développé par la Demanderesse, qui est considéré comme l'état de la technique le plus proche. Ce procédé consiste à souder à plat en bout à bout avant pliage le trapèze en acier inoxydable de l'embase avec celui en acier noir du fût, ladite soudure étant réalisée en semi-automatique avec du métal d'apport au MIG par exemple. Un renfort intérieur est alors mis en place pour augmenter la résistance mécanique de l'ensemble. Après avoir réaliser la soudure, le surplus du cordon de soudure est meulé avant pliage. Toutefois, ce procédé de soudure laisse apparaître un joint inesthétique d'environ 0,5 mm de profondeur sur la face extérieure du candélabre.

La présente invention a pour but de remédier à ces divers inconvénients en proposant un procédé de fabrication de poteaux bi-matériaux permettant d'avoir une soudure avec une pénétration de 100% sans renfort supplémentaire et d'avoir l'embase de préférence en acier inoxydable dans le prolongement exact du fût en acier de sorte qu'après les étapes de finition la jonction entre ces deux éléments ne puisse être distinguée visuellement. Ce procédé permet donc de présenter un aspect esthétique uniforme selon lequel le cordon de soudure n'est plus apparent ; la séparation entre les deux types d'acier n'est alors détectable que par des moyens non visuels comme par exemple un aimant.

A cet égard, la présente invention a pour objet un procédé de fabrication d'un poteau métallique bi-matériaux tel que définit dans la revendication 1.

On n'aura aucune difficulté à comprendre que compte tenu de l'absence de renfort et/ou de bague extérieure, ce procédé de fabrication permet en outre une réduction significative de prix de revient dudit poteau métallique bi-matériaux.

D'autres avantages et caractéristiques ressortiront mieux de la description qui va suivre, du procédé selon l'invention, donnée à titre d'exemple non limitatif.

Ainsi, le procédé de fabrication d'un poteau métallique bi-matériaux selon la présente invention permet de réaliser ledit poteau à partir d'au moins deux ébauches métalliques fabriquées dans un atelier de métallerie.

La première ébauche, en forme générale de trapèze, avantageusement isocèle, et qui correspond au fût dudit poteau, est de préférence réalisée dans un premier matériau, de préférence un alliage métallique choisi parmi les aciers au carbone.

La deuxième ébauche, en forme générale de trapèze, avantageusement isocèle, correspondant à l'embase, est de préférence réalisée dans un deuxième matériau, de préférence un alliage métallique choisi parmi les aciers inoxydables afin de garantir une protection anti-corrosion de très bonne qualité. Cette deuxième ébauche est telle qu'elle prolonge avec une précision de l'ordre du millimètre la première ébauche, c'est-à-dire que la petite base de la deuxième ébauche est égale à la grande base de la première ébauche et que l'angle entre les deux cotés inclinés de la deuxième ébauche est le même que celui entre les deux cotés inclinés de la première ébauche. En outre, cette deuxième ébauche possède une hauteur suffisante pour garantir une protection anti-corrosion de l'embase et donc du poteau contre notamment les projections alcalines et le milieu ambiant. Ladite deuxième ébauche aura avantageusement une hauteur supérieure à 300 mm.

Compte tenu des tolérances de fabrications de l'atelier de métallerie fabriquant les ébauches, les première et deuxième ébauches sont contrôlées, présentées l'une contre l'autre et appairées.

L'assemblage selon l'invention des première et deuxième ébauches est réalisé sur une machine, spécifiquement développée par la Demanderesse, comportant un bâti muni d'une table horizontale permettant un retournement horizontal de 180°, une installation de soudage linéaire et une unité de polissage.

Il est bien évident que le procédé selon la présente invention peut être mis en oeuvre au moyen d'une installation de soudage et d'une unité de polissage indépendantes l'une de l'autre.

Une fois les première et deuxième ébauches appairées, le procédé de fabrication selon la présente invention commence par une étape de mise en place de la première ébauche à plat sur la table horizontale de la machine. La première ébauche est alors autocentrée et bridée par le biais d'un ensemble de premières butées pour permettre son alignement par rapport aux axes de la machine.

La première ébauche est ensuite débridée puis mise en appui à l'avant de la table sur des deuxièmes butées associées à l'installation de soudage linéaire et à nouveau bridée sur ladite installation de soudage linéaire.

Lesdites deuxièmes butées sont alors escamotées afin de permettre la mise en place à plat sur la table de la deuxième ébauche dans le prolongement exact de la première ébauche, en rapprochant la petite base de la deuxième ébauche de la grande base de la première ébauche de manière à former un plan de joint à souder. La deuxième ébauche est ensuite bridée sur l'installation de soudage linéaire afin d'éviter tout mouvement et/ou toute déformation dus à l'opération de soudage.

Les première et deuxième ébauches sont maintenant assemblées entre elles par soudage continu avec une pénétration de 100%. La technique de soudure utilisée est avantageusement une soudure à l'arc plasma sur toute l'épaisseur. Du fait de ce type de soudure, l'assemblage entre les deux ébauches présente une résistance mécanique suffisante et ne nécessite plus la mise en place d'un renfort. En outre, cette technique permet d'obtenir en une passe une pénétration de 100%.

Il va de soi que la soudure transversale peut être réalisée par toute autre procédé de soudure sans sortir du cadre de la présente invention.

Ainsi ladite soudure transversale peut-être obtenue avec par exemple le soudage à l'arc submergé. L'inconvénient de cette technologie est la formation d'un bourrelet inesthétique de l'ordre de 2 à 3 mm de hauteur sur 4 à 5 mm de largeur qui peut toutefois être réduit par une opération de meulage longue et coûteuse.

Ladite soudure transversale peut être aussi réalisée par soudure en haute fréquence. La soudure doit ensuite être raclée ce qui entraîne désavantageusement la présence d'un défaut lié à l'arrachement de matière.

En revanche, l'utilisation du soudage à l'arc plasma est avantageuse car cette technique ne laisse pas de bourrelet et le cordon de soudure formé présente seulement un aspect inesthétique du fait notamment d'une rugosité apparente. Ce défaut peut toutefois facilement être rectifié par une opération de polissage de manière à rendre ledit cordon non apparent.

L'ensemble ainsi constitué des première et deuxième ébauches soudées entre elles est alors débridé puis mis en appui à l'arrière de la table et rebridé sur l'installation de soudage linéaire afin de placer le cordon de soudure au droit de l'outil de polissage. Le polissage de la face supérieure du cordon de soudure est réalisé parallèlement audit cordon et permet d'obtenir un aspect fini rendant la jonction entre les première et deuxième ébauches non apparente. Un tel traitement de surface permet donc d'éviter la mise en place d'une bague extérieure masquant la jonction entre les deux ébauches.

L'ensemble constitué des première et deuxième ébauches soudées entre elles est ensuite pivoté de 180° suivant son axe longitudinal via le système de retournement de la machine afin de placer la face polie du cordon de soudure en bas. Ainsi, après l'opération de mise en volume dudit poteau, ladite face du cordon de soudure finie par l'opération de polissage est sur l'extérieur du poteau et la face brute du cordon de soudure est à l'intérieur dudit poteau.

Après le retournement, ledit ensemble est évacué vers un autre poste de travail pour la mise en volume du poteau métallique. Ledit ensemble est donc mis en forme pour fabriquer un poteau polygonal ou cylindrique ou cylindro-conique, afin d'obtenir un fût ouvert présentant deux bords longitudinaux rapprochés l'un de l'autre de manière à former un plan de joint à souder.

Ledit plan de joint est à présent soudé en continu pour former un cordon de soudure longitudinal. Une étape d'émerisage dudit cordon de soudure longitudinal est réalisée après l'étape de soudage, de manière à donner au cordon de soudure longitudinal formé un aspect poli, qui le rend peu visible. Ces deux dernières étapes ainsi que l'installation associée sont l'objet du brevet FR 2 884 447 publié au nom de la Demanderesse.

Ainsi formé, le poteau métallique subit enfin les différentes étapes de retouche, mise en place et finition des divers équipements et enfin galvanisation et/ou peinture. Le poteau métallique ainsi fini présente la caractéristique d'avoir une jonction entre l'embase et le fût non apparente. La séparation entre les deux matériaux n'est alors détectable que par le biais d'autres moyens comme par exemple un aimant

Il va de soi que les premier et deuxième matériaux sont aptes à recevoir les opérations de finition telles que par exemple la galvanisation.

L'Homme du Métier n'aura aucune difficulté pour comprendre que le cordon de soudure avec une pénétration de 100% peut aussi être obtenu en deux fois, c'est-à-dire que l'on réalise une première passe à 50% d'un coté, puis on retourne l'ensemble des deux ébauches soudées et enfin on réalise une deuxième passe à 50% de l'autre coté. Cette solution est évidemment moins intéressante car plus coûteuse du fait de la multiplication des opérations de retournement et de soudage.

De plus, il va également de soi que les ébauches peuvent avoir une autre forme générale que celle d'un trapèze, par exemple un rectangle ou un carré, sans sortir du cadre de la présente invention.

Enfin, on comprend bien que l'Homme du Métier peut ajouter des opérations de retournement des première et deuxième ébauches avant leur assemblage pour la mise en place notamment de moyens de fixation d'équipements extérieurs tels que par exemple des crosses, sans sortir du cadre de la présente invention.

La présente invention s'applique plus particulièrement à la fabrication de poteaux métalliques soudés destinés à former un candélabre d'éclairage public, mais il est bien évident que l'exemple que l'on vient de donner n'est qu'une illustration particulière en aucun cas limitative quant aux domaines d'application de l'invention telle que définie dans les revendications ci-jointes.

## Revendications

1. - Procédé de fabrication d'un poteau métallique bi-matériaux à partir d'au moins deux ébauches présentant une jonction non apparente entre lesdites ébauches sans bague extérieure et/ou renfort supplémentaire, lesdites première et deuxième ébauches en forme générale de trapèze étant réalisées respectivement à partir d'un premier et d'un second matériaux métalliques et disposées de sorte que la petite base de la deuxième ébauche et la grande base de la première ébauche forment un plan de joint à souder **caractérisé en ce qu'**il comprend une étape de soudage dudit plan de joint pour former un cordon de soudure transversal
à un axe longitudinal des deux ébauches, avec une pénétration à 100%, une étape de polissage dudit cordon de soudure transversal et une étape de retournement à 180° desdites ébauches soudées
autour de l'axe longitudinal des deux ébauches soudées avant la mise en volume dudit poteau pour que la face polie soit sur l'extérieur dudit poteau fini ce qui a pour effet de rendre non apparente la jonction entre lesdites première et deuxième ébauches.

2. - Procédé selon la revendication 1, **caractérisé en ce que** l'étape de soudage est réalisée en continu le long du plan de joint.

3. - Procédé selon l'une quelconque des revendications précédentes, **caractérisé en ce que** le soudage est réalisé par un procédé à l'arc plasma.

4. - Procédé selon l'une quelconque des revendications précédentes, **caractérisé en ce que** le polissage est réalisé parallèlement au cordon de soudure transversal.

5. - Procédé selon l'une quelconque des revendications précédentes, **caractérisé en ce que** la deuxième ébauche prolonge avec une précision de l'ordre du millimètre la première ébauche, lesdites ébauches étant en forme générale d'un trapèze isocèle.

6. - Procédé selon l'une quelconque des revendications précédentes, **caractérisé en ce que** les première et deuxième ébauches correspondent respectivement au fût et à l'embase dudit poteau.

7. . - Procédé selon l'une quelconque des revendications précédentes, **caractérisé en ce que** le premier matériau métallique est un alliage choisi parmi les aciers au carbone.

8. . - Procédé selon l'une quelconque des revendications précédentes, **caractérisé en ce que** le deuxième matériau métallique est un alliage métallique choisi parmi les aciers inoxydables.

9. - Procédé selon l'une quelconque des revendications précédentes, **caractérisé en ce que** le poteau métallique forme un candélabre d'éclairage public.

## Claims

1. Method for manufacturing a biomaterial metal post from at least two blanks having an invisible join between said blanks with no outer ring and/or additional reinforcement, said first and second blanks having a general trapezium shape being made respectively of a first and second metal materials and arranged such that the small base of the second blank and the large base of the first blank form a joint plane to be welded, **characterised in that** it comprises step for welding said joint plane to form a transverse weld seam have a longitudinal axis of both blanks, with 100% penetration, a step for polishing said transverse weld seam and a step for rotating said welded blanks by 180° about the longitudinal axis of both welded blanks, before the assembly of said post such that the polished face is on the outside of said finished post, rendering the join between said first and second blanks invisible.

2. Method according to claim 1, **characterised in that** the welding step is performed continuously along the joint plane.

3. Method according to any of the above claims, **characterised in that** the welding is performed using a plasma arc method.

4. Method according to any of the above claims, **characterised in that** the polishing is performed in parallel with the transverse weld seam.

5. Method according to any of the above claims, **characterised in that** the second blanks extends from the first blank with precision in the region of one millimetre, said blanks having a general isosceles trapezium shape.

6. Method according to any of the above claims, **characterised in that** the first and second blanks correspond to the shaft and seat of said post, respectively.

7. Method according to any of the above claims, **characterised in that** the first metal material is an alloy selected from carbon steels.

8. Method according to any of the above claims, **characterised in that** the second metal material is a metal alloy selected from stainless steels.

9. Method according to any of the above claims, **characterised in that** the metal post forms a public street lamp.

## Patentansprüche

1. Verfahren zur Herstellung eines Metallmastes aus Bimetall aus mindestens zwei Rohlingen, mit einer nicht sichtbaren Verbindung zwischen diesen Rohlingen ohne äußeren Ring und / oder zusätzliche Verstärkung, wobei der erste und der zweite Rohling in einer im Allgemeinen trapezartigen Form jeweils aus einem ersten und aus einem zweiten metallischen Material hergestellt werden und so angeordnet sind, dass der kleine Sockel des zweiten Rohlings und der große Sockel des ersten Rohlings eine zu verschweißende Formtrennungsfläche bilden, **dadurch gekennzeichnet, dass** es eine Schweißstufe dieser Formtrennungsfläche aufweist, wodurch auf einer Längsachse der beiden verschweißten Rohlinge eine quer verlaufende Schweißnaht mit einer Durchdringung von 100% gebildet wird, ebenso wie eine Polierstufe dieser quer verlaufenden Schweißnaht und eine Kippstufe der beiden verschweißten Rohlinge von 180° um die senkrechte Achse der beiden verschweißten Rohlinge vor der Formgebung des Mastes, damit die geschliffene Fläche sich auf der Außenseite des fertig gestellten Mastes befindet, was bewirkt, dass die Verbindung zwischen dem ersten und zweiten Rohling nicht sichtbar ist.

2. Verfahren nach Anspruch 1, **dadurch gekennzeichnet, dass** die Schweißstufe durchgehend entlang der Formtrennungsfläche ausgeführt wird.

3. Verfahren nach einem der vorhergehenden Ansprüche, **dadurch gekennzeichnet, dass** das Schweißen durch ein Plasmalichtbogenverfahren ausgeführt wird.

4. Verfahren nach einem der vorhergehenden Ansprüche, **dadurch gekennzeichnet, dass** das Polieren parallel zur quer verlaufenden Schweißnaht ausgeführt wird.

5. Verfahren nach einem der vorhergehenden Ansprüche, **dadurch gekennzeichnet, dass** der zweite Rohling den ersten Rohling millimetergenau verlängert, wobei die beiden Rohlinge im Allgemeinen die Form eines gleichschenkeligen Trapezes aufweisen.

6. Verfahren nach einem der vorhergehenden Ansprüche, **dadurch gekennzeichnet, dass** der erste und der zweite Rohling jeweils dem Schaft und dem Fuß des Mastes entsprechen.

7. Verfahren nach einem der vorhergehenden Ansprüche, **dadurch gekennzeichnet, dass** das erste metallische Material eine Kohlenstoffstahl-Legierung ist.

8. Verfahren nach einem der vorhergehenden Ansprüche, **dadurch gekennzeichnet, dass** das zweite metallische Material eine Metall-Legierung aus rostfreiem Stahl ist.

9. Verfahren nach einem der vorhergehenden Ansprüche, **dadurch gekennzeichnet, dass** der Metallmast einen Lichtmast bildet.
